(19) Europäisches Patentamt / European Patent Office / Office européen des brevets

(11) **EP 4 589 477 A1**

(12) **EUROPEAN PATENT APPLICATION**
published in accordance with Art. 153(4) EPC

(43) Date of publication:
**23.07.2025 Bulletin 2025/30**

(21) Application number: **23865218.4**

(22) Date of filing: **24.08.2023**

(51) International Patent Classification (IPC):
**G06N 3/0455** $^{(2023.01)}$

(52) Cooperative Patent Classification (CPC):
**G06N 3/04; G06N 3/0455**

(86) International application number:
**PCT/JP2023/030480**

(87) International publication number:
**WO 2024/057861 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.09.2022 JP 2022146887**

(71) Applicant: **National Institute of Information and Communications Technology**
**Koganei-shi,**
**Tokyo 184-8795 (JP)**

(72) Inventor: **HOSODA, Kazufumi**
**Koganei-shi, Tokyo 184-8795 (JP)**

(74) Representative: **Boult Wade Tennant LLP**
**Salisbury Square House**
**8 Salisbury Square**
**London EC4Y 8AP (GB)**

(54) **AUTOENCODING SYSTEM, PROGRAM, AND METHOD**

(57)    A system (1) encodes input signals ($Si_1$, $Si_2$) and then decodes respective encoded signals as output signals ($So_1$, $So_2$). Each of a first input node ($Nd_1$), a second input node ($Nd_2$), a hub node ($Nd_3$), an auxiliary node ($Nd_4$), a first output node ($Nd_5$), and a second output node ($Nd_6$) outputs at least one of a positive signal representing a state value of the node and a negative signal representing a value having a sign inverted from a sign of the state value. Each of the first input node ($Nd_1$), the second input node ($Nd_2$), the hub node ($Nd_3$), the auxiliary node ($Nd_4$), the first output node ($Nd_5$), and the second output node ($Nd_6$) changes the state value of the node such that a value determined by adding a noise signal received by the node to a value determined by subtracting the state value of the node from an activation value corresponding to a total value of signals input to the node is equal to a time derivative value of the state value of the node.

FIG.1

EP 4 589 477 A1

## Description

TECHNICAL FIELD

The present disclosure relates to a system, a program and a method for performing autoencoding.

BACKGROUND ART

Conventionally, there has been known a configuration for performing autoencoding. For example, NPL 1 discloses a variational autoencoder of an encoder-decoder model, which is formed as a neural network. The variational autoencoder extracts latent variables of a lower dimension than input data from the input data, and reproduces output data corresponding to the input data from the latent variables. According to the variational autoencoder, important features of the input data can be extracted as the latent variables, and thus, generalization performance of an inference model and a reduction in computational effort can be achieved.

CITATION LIST

NON PATENT LITERATURE

NPL 1: Diederik P. Kingma, Max Welling, "Auto-Encoding Variational Bayes," arXiv:1312.6114.
NPL 2: Masayo Inoue, Kunihiko Kaneko, "Cooperative Adaptive Responses in Gene Regulatory Networks with Many Degrees of Freedom," PLOS Computational Biology, April 4, 2013, 9(4): e1003001.

SUMMARY OF INVENTION

TECHNICAL PROBLEM

It is known that a life system (e.g., a cranial nerve network or a cell signaling network) is formed as a dynamic network (a dynamic system with large degrees of freedom) which is composed of many elements and changes constantly, and performs efficient information processing by utilizing noise such as thermal fluctuation. [0005] In an artificially designed information processing system, on the other hand, it is often the case that noise is suppressed as a disturbance that interferes with information processing, and is not actively used. In order to implement reliable information processing in the artificial information processing system, it is necessary to increase a signal-to-noise ratio (S/N ratio) by using a signal of higher energy than the noise to the extent that the effect of the noise can be ignored. As a result, it is often the case that the energy required for information processing by the information processing system is higher than the energy required for comparable information processing by the life system.

The present disclosure has been made to solve the above-described problem, and an object thereof is to improve energy efficiency of an information processing system.

SOLUTION TO PROBLEM

A system according to one aspect of the present disclosure encodes a first input signal and a second input signal and then decodes respective encoded signals as a first output signal and a second output signal. The system includes a first input node, a second input node, a hub node, an auxiliary node, a first output node, and a second output node. The first input node receives the first input signal. The second input node receives the second input signal. The first output node outputs the first output signal. The second output node outputs the second output signal. Each of the first input node, the second input node, the hub node, the auxiliary node, the first output node, and the second output node outputs at least one of a positive signal representing a state value of the node and a negative signal representing a value having a sign inverted from a sign of the state value. The first input node outputs the negative signal of the first input node to each of the first input node and the hub node. The second input node outputs the negative signal of the second input node to the hub node. The hub node outputs the negative signal of the hub node to each of the hub node, the first output node, and the second output node. The auxiliary node outputs the positive signal of the auxiliary node to each of the hub node and the auxiliary node. The first output node outputs the positive signal of the first output node to the first output node, and outputs the positive signal of the first output node as the first output signal. The second output node outputs the positive signal of the second output node to each of the hub node and the second output node, and outputs the positive signal of the second output node as the second output signal. Each of the first input node, the second input node, the hub node, the auxiliary node, the first output node, and the second output node changes the state value of the node such that a value determined by adding a noise signal received by the node to a value determined by subtracting the state value of the node from an activation value corresponding to a total value of signals input to the node is equal to a time derivative value of the state value of the node.

A program according to another aspect of the present disclosure encodes a first input signal and a second input signal and then decodes respective encoded signals as a first output signal and a second output signal, in a system that receives the first input signal and the second input signal and outputs the first output signal and the second output signal. The system includes a first input node, a second input node, a hub node, an auxiliary node, a first output node, and a second output node. The first input node receives the first input signal. The second input node receives the second input signal. The first output node outputs the first output signal. The second output node outputs the second output signal. Each of the first input node, the second input node, the hub node, the auxiliary node, the first output node, and the second output node outputs at least one of a positive signal representing a state value of the node and a negative signal representing a value having a sign inverted from a sign of the state value. The first input node outputs the negative signal of the first input node to each of the first input node and the hub node. The second input node outputs the negative signal of the second input node to the hub node. The hub node outputs the negative signal of the hub node to each of the hub node, the first output node, and the second output node. The auxiliary node outputs the positive signal of the auxiliary node to each of the hub node and the auxiliary node. The first output node outputs the positive signal of the first output node to the first output node, and outputs the positive signal of the first output node as the first output signal. The second output node outputs the positive signal of the second output node to each of the hub node and the second output node, and outputs the positive signal of the second output node as the second output signal. The program is executed by a processor included in each of the first input node, the second input node, the hub node, the auxiliary node, the first output node, and the second output node, to thereby change the state value of the node such that a value determined by adding a noise signal received by the node to a value determined by subtracting the state value of the node from an activation value corresponding to a total value of signals input to the node is equal to a time derivative value of the state value of the node.

A method according to another aspect of the present disclosure encodes a first input signal and a second input signal and then decodes respective encoded signals as a first output signal and a second output signal, in a system that receives the first input signal and the second input signal and outputs the first output signal and the second output signal. The system includes a first input node, a second input node, a hub node, an auxiliary node, a first output node, and a second output node. The first input node receives the first input signal. The second input node receives the second input signal. The first output node outputs the first output signal. The second output node outputs the second output signal. Each of the first input node, the second input node, the hub node, the auxiliary node, the first output node, and the second output node outputs at least one of a positive signal representing a state value of the node and a negative signal representing a value having a sign inverted from a sign of the state value. The first input node outputs the negative signal of the first input node to each of the first input node and the hub node. The second input node outputs the negative signal of the second input node to the hub node. The hub node outputs the negative signal of the hub node to each of the hub node, the first output node, and the second output node. The auxiliary node outputs the positive signal of the auxiliary node to each of the hub node and the auxiliary node. The first output node outputs the positive signal of the first output node to the first output node, and outputs the positive signal of the first output node as the first output signal. The second output node outputs the positive signal of the second output node to each of the hub node and the second output node, and outputs the positive signal of the second output node as the second output signal. The method includes, by each of the first input node, the second input node, the hub node, the auxiliary node, the first output node, and the second output node, calculating a total value of signals input to the node, and changing the state value of the node such that a value determined by adding a noise signal received by the node to a value determined by subtracting the state value of the node from an activation value corresponding to the total value is equal to a time derivative value of the state value of the node.

ADVANTAGEOUS EFFECTS OF INVENTION

According to a system, a program and a method in the present disclosure, each of a first input node, a second input node, a hub node, an auxiliary node, a first output node, and a second output node changes a state value of the node such that a value determined by adding a noise signal received by the node to a value determined by subtracting the state value of the node from an activation value corresponding to a total value of signals input to the node is equal to a time derivative value of the state value of the node, and thus, energy efficiency of the system can be improved.

BRIEF DESCRIPTION OF DRAWINGS

Fig. 1 is a block diagram showing a configuration of an information processing system according to an embodiment.
Fig. 2 shows twelve time charts representing temporal changes in a state value of a hub node and temporal changes in state values of output nodes corresponding to four types of input signals, in the case where the information processing system has a S/N ratio of 10 dB.
Fig. 3 shows four time charts representing temporal changes in the state value of the hub node and temporal changes in the state values of the output nodes corresponding to the four types of input signals, in the case where a noise signal is 0 (in the case where there is no noise signal).
Fig. 4 shows a change in a potential energy curve of a first output node in the case where the input signals are switched from {0, 0} to {1, 0}.
Fig. 5 shows a change in a potential energy curve of a second output node in the case where the input signals are switched from {0, 0} to {1, 0}.
Fig. 6 is a block diagram showing an example hardware configuration of a node shown in Fig. 1.

Fig. 7 is a flowchart showing an example flow of a process performed by a processor that executes an autoencoding program shown in Fig. 6.

Fig. 8 is a block diagram showing a configuration of an information processing system according to a modification of the embodiment.

DESCRIPTION OF EMBODIMENTS

Embodiments will be hereinafter described in detail with reference to the drawings, in which the same or corresponding portions are denoted by the same reference characters and description thereof will not be repeated in principle.

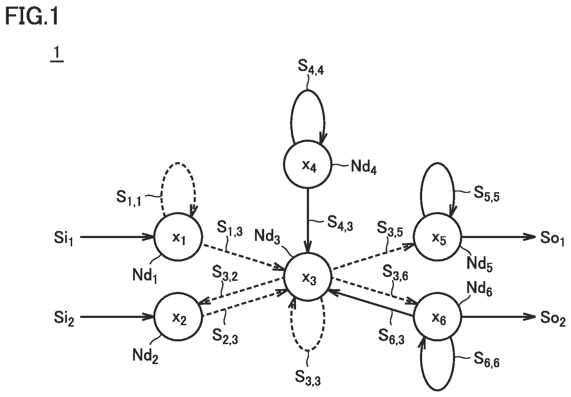

Fig. 1 is a block diagram showing a configuration of an information processing system 1 according to an embodiment. Information processing system 1 may be formed, for example, as an analog integrated circuit included in a computer, or as an edge computing system including a plurality of edge nodes. Information processing system 1 may be formed as part of a larger-scale information processing system.

As shown in Fig. 1, information processing system 1 encodes an input signal $Si_1$ (a first input signal) and an input signal $Si_2$ (a second input signal) and then decodes respective encoded signals as an output signal $So_1$ (a first output signal) and an output signal $So_2$ (a second output signal). Information processing system 1 includes an input node $Nd_1$ (a first input node), an input node $Nd_2$ (a second input node), a hub node $Nd_3$, an auxiliary node $Nd_4$, an output node $Nd_5$ (a first output node), and an output node $Nd_6$ (a second output node).

Input nodes $Nd_1$ and $Nd_2$ receive input signals $Si_1$ and $Si_2$, respectively. Output nodes $Nd_5$ and $Nd_6$ output output signals $So_1$ and $So_2$, respectively. In information processing system 1, two-dimensional input signals $Si_1$ and $Si_2$ are encoded as a one-dimensional state value $x_3$ of hub node $Nd_3$, and state value $x_3$ is decoded into two-dimensional output signals $So_1$ and $So_2$.

Each of input nodes $Nd_1$ and $Nd_2$, hub node $Nd_3$, auxiliary node $Nd_4$, and output nodes $Nd_5$ and $Nd_6$ (a node $Nd_i$ (where i is a natural number equal to or greater than 1 and equal to smaller than 6)) outputs at least one of a positive signal representing a state value $x_i$ of node $Nd_i$ and a negative signal representing a value having a sign inverted from a sign of state value $x_i$. The positive signal and the negative signal are indicated by a solid arrow and a dotted arrow, respectively, in Fig. 1. State value $x_i$ has an initial value of 0.

Input node $Nd_1$, input node $Nd_2$, hub node $Nd_3$, auxiliary node $Nd_4$, output node $Nd_5$, and output node $Nd_6$ form a network that can be represented as a directed graph. A signal output from a node $Nd_j$ to $Nd_i$ is hereinafter denoted by $S_{j, i}$.

Input node $Nd_1$ outputs negative signals $S_{1, 1}$ and $S_{1, 3}$ to input node $Nd_1$ and hub node $Nd_3$, respectively. Input node $Nd_2$ outputs a negative signal $S_{2, 3}$ to

hub node $Nd_3$. Hub node $Nd_3$ outputs negative signals $S_{3, 3}$, $S_{3, 5}$, and $S_{3, 6}$ to hub node $Nd_3$, output node $Nd_5$, and output node $Nd_6$, respectively. Auxiliary node $Nd_4$ outputs positive signals $S_{4, 3}$ and $S_{4, 4}$ to hub node $Nd_3$ and auxiliary node $Nd_4$, respectively. Output node $Nd_5$ outputs a positive signal $S_{5, 5}$ to output node $Nd_5$, and outputs a state value $x_5$ as output signal $So_1$. Output node Nd6 outputs positive signals $S_{6, 3}$ and $S_{6,6}$ of output node Nd6 to hub node Nd3 and output node Nd6, respectively, and outputs a state value $x_6$ as output signal $So_2$.

An adjacency matrix C of the directed graph formed by input node $Nd_1$, input node $Nd_2$, hub node $Nd_3$, auxiliary node $Nd_4$, output node $Nd_5$, and output node $Nd_6$ is represented, for example, by an equation (1) below.

[Math. 1]

Math. 1

$$C = \begin{pmatrix} -1 & 0 & 0 & 0 & 0 & 0 \\ 0 & 0 & -1 & 0 & 0 & 0 \\ -1 & -1 & -1 & 1 & 0 & 1 \\ 0 & 0 & 0 & 1 & 0 & 0 \\ 0 & 0 & -1 & 0 & 1 & 0 \\ 0 & 0 & -1 & 0 & 0 & 1 \end{pmatrix} \cdots (1)$$

In adjacency matrix C, a column number j (a natural number equal to or greater than 1 and equal to smaller than 6) represents node $Nd_j$ which outputs a signal, and a row number i represents node $Nd_i$ to which the signal is output. Each component of adjacency matrix C is any one of 1 representing a positive signal, -1 representing a negative signal, and 0 indicating that no signal is output from node $Nd_j$ to $Nd_i$. Signal $S_{j, i}$ is equal to the product of a component $C_{i, j}$ and a state value $x_j$.

For example, a component $C_{3, 4}$ being 1 indicates that positive signal $S_{4, 3} (= 1 \cdot x_4)$ is output from node $Nd_4$ to $Nd_3$. A component $C_{5, 3}$ being -1 indicates that negative signal $S_{3, 5} (= (-1) \cdot x_3)$ is output from node $Nd_3$ to $Nd_5$. A component $C_{1, 2}$ being 0 indicates that no signal is output from node $Nd_2$ to $Nd_1$ (that a signal $S_{2, 1}$ is 0 (= $0 \cdot x_2$)).

Each of node $Nd_1$, input node $Nd_2$, hub node $Nd_3$, auxiliary node $Nd_4$, output node $Nd_5$, and output node $Nd_6$ calculates a total value $y_i$ of signals input to the node, as shown in an equation (2) below. A natural number N is 6 in information processing system 1. Natural number N may be equal to or greater than 7.

[Math. 2]

Math. 2

$$y_i = S_i + \sum_{j=1}^{N} C_{i,j} \cdot x_j = S_i + \sum_{j=1}^{N} S_{j,i} \cdots (2)$$

In the equation (2), a signal $S_i$ is a total value of signals input to node $Nd_i$ from a configuration other than nodes $Nd_1$ to $Nd_6$. For example, signals $S_1$ and $S_2$

correspond to input signals $Si_1$ and $Si_2$, respectively. Each of signals $S_3$, $S_4$, $S_5$ and $S_6$ is 0 because there are no signals input to nodes $Nd_3$ to $Nd_6$ from a configuration other than nodes $Nd_1$ to $Nd_6$.

Node $Nd_i$ changes state value $x_i$ of node $Nd_i$ to satisfy an equation (3) below. In the equation (3), $\eta$ represents a noise signal received by node $Nd_i$. Information processing system 1 has a S/N ratio of, for example, about 10 dB. The left-hand side of the equation (3) is a time derivative value of state value $x_i$. The first term of the right-hand side is an output value of an activation function (an activation value) for total value $y_i$. In the equation (3), a sigmoid function having a gain of $\beta$ (>0) is used as an example of the activation function. Gain $\beta$ is 10, for example. The activation function in the equation (3) is not limited to the sigmoid function. The activation function in the equation (3) may be, for example, a step function, a hyperbolic tangent function, or a ramp (rectified linear unit (ReLU)) function.

[Math. 3]
Math. 3

$$\frac{dx_i}{dt} = \frac{1}{1 + exp(-\beta \cdot y_i)} - x_i + \eta \quad \cdots (3)$$

As shown in the equation (3), node $Nd_i$ changes state value $x_i$ of node $Nd_i$ such that a value determined by adding noise signal $\eta$ to a value determined by subtracting state value $x_i$ from the activation value corresponding to total value $y_i$ is equal to the time derivative value of state value $x_i$.

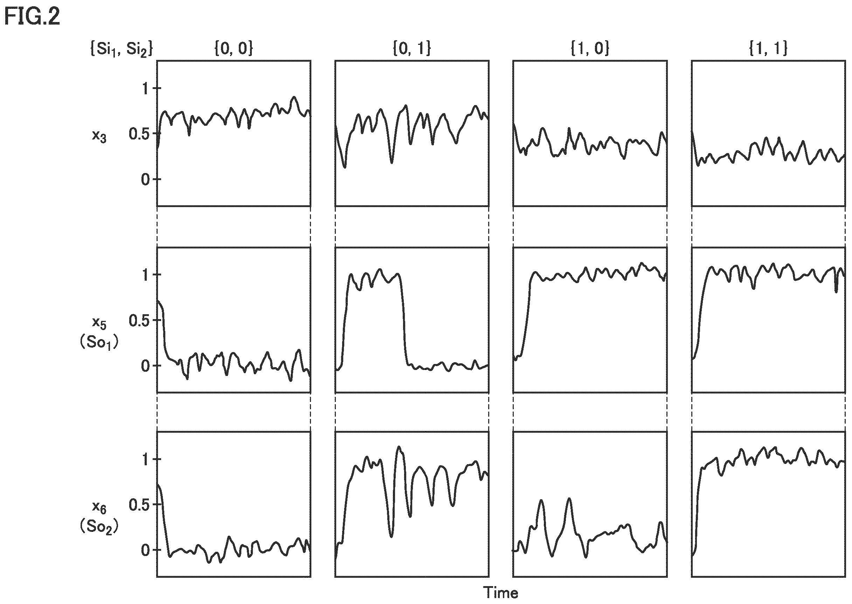

Fig. 2 shows twelve time charts representing temporal changes in state value $x_3$ of hub node $Nd_3$ and temporal changes in state values $x_5$ and $x_6$ of output nodes $Nd_5$ and $Nd_6$ corresponding to four types of input signals $Si_1$ and $Si_2$, in the case where information processing system 1 has a S/N ratio of 10 dB. Fig. 2 shows the cases where input signals $Si_1$ and $Si_2$ are {0, 0}, {0, 1}, {1, 0} and {1, 1} in the first, second, third and fourth columns, respectively.

As shown in Fig. 2, in each of the cases where input signals $Si_1$ and $Si_2$ are {0, 0}, {0, 1}, {1, 0} and {1, 1}, state values $x_5$ and $x_6$ (output signals $So_1$ and $So_2$) reach equilibrium near the values of input signals $Si_1$ and $Si_2$, respectively, as time passes. That is, information processing system 1 has the function of an autoencoder (autoencoding function).

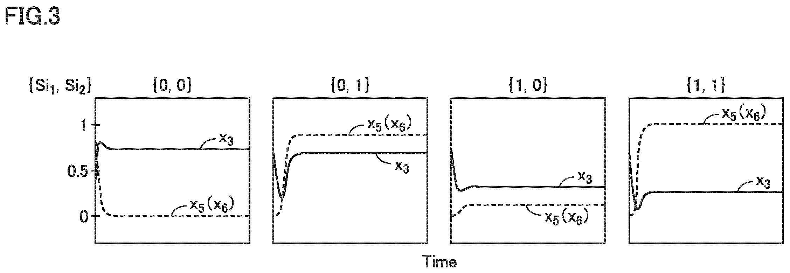

Fig. 3 shows four time charts representing temporal changes in state value $x_3$ of hub node $Nd_3$ and temporal changes in state values $x_5$ and $x_6$ of output nodes $Nd_5$ and $Nd_6$ corresponding to the four types of input signals $Si_1$ and $Si_2$, in the case where noise signal $\eta$ is 0 (in the case where there is no noise signal). In Fig. 3, the temporal changes in state values $x_3$, $x_5$ and $x_6$ corresponding to one set of input signals $Si_1$ and $Si_2$ are included in one time chart.

As shown in Fig. 3, in the case where input signals $Si_1$ and $Si_2$ are equal to each other, state values $x_5$ and $x_6$ (output signals $So_1$ and $So_2$) reach equilibrium near the values of input signals $Si_1$ and $Si_2$, respectively, as time passes. In the case where input signals $Si_1$ and $Si_2$ are different each other, however, state value $x_5$ reaches equilibrium near an opposite value to that of input signal $Si_1$. That is, in the case where there is no noise signal, information processing system 1 does not function as an autoencoder. This indicates that noise signal $\eta$ is actively used as a means for performing the autoencoding function and is not a disturbance to be suppressed in information processing system 1. Information processing system 1 does not need to increase the energy of input signals $Si_1$ and $Si_2$ to the extent that the effect of noise signal $\eta$ can be ignored, and thus, the energy efficiency can be improved.

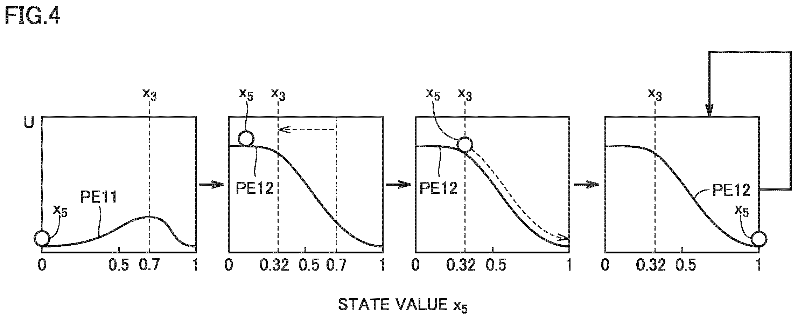

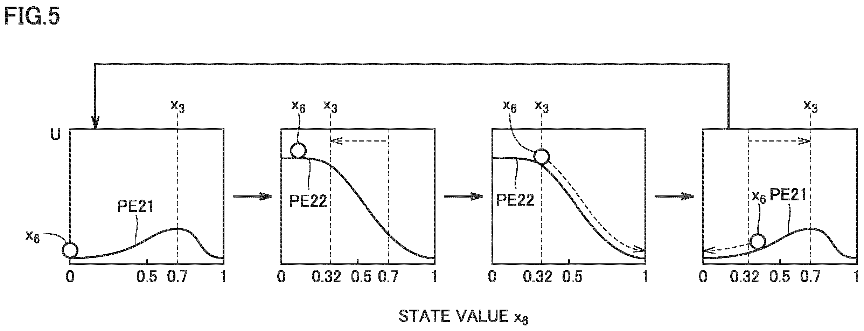

With reference to Figs. 4 and 5, the following describes a mechanism by which information processing system 1 functions as an autoencoder even in the case where input signals $Si_1$ and $Si_2$ are different from each other. Fig. 4 shows a change in a potential energy curve of output node Nds in the case where input signals $Si_1$ and $Si_2$ are switched from {0, 0} to {1, 0}. The potential energy curve is a curve indicating correspondence between a state value and potential energy U of a corresponding node. A point with a zero slope on the potential energy curve is hereinafter also referred to as a stable point of the state value corresponding to the potential energy curve. The potential energy is an indicator of instability of the state value, and corresponds to a value determined by integrating force over position in a dynamic system. The state value changes in a direction in which the potential energy decreases. State value $x_3$ is indicated by a dotted line in Fig. 4. To facilitate understanding of a change in state value $x_5$, state value $x_5$ is schematically shown as a circle rolling on the potential energy curve. The same is true for Fig. 5 which will be described later.

Referring to Fig. 4, before input signals $Si_1$ and $Si_2$ are switched from {0, 0} to {1, 0}, it is supposed that state value $x_3$ is a value around 0.7, the potential energy curve of output node $Nd_5$ is PE11, and state value $x_5$ is stable at 0 on potential energy curve PE11. That is, a point corresponding to 0 on potential energy curve PE11 is a stable point of state value $x_5$.

Then, when the input signals are switched from {0, 0} to {1, 0} and state value $x_3$ decreases to 0.32 accordingly, the potential energy curve changes from PE11 to PE12. Although a point corresponding to 0 is a stable point of state value $x_5$ on potential energy curve PE12 as well, negative signal $S_{3, 5}$ output from hub node $Nd_3$ to output node $Nd_5$ increases to -0.32, and the suppression of state value $x_5$ by negative signal $S_{3, 5}$ is therefore relaxed. In such a state, state value $x_5$ may slightly increase by noise signal $\eta$. When state value $x_5$ increases, potential energy curve PE12 is downwardly sloped, and state value $x_5$ therefore moves in a downwardly sloped manner on potential energy curve PE12 and reaches around 1. Since state value $x_3$ is not influ-

enced by state value $x_5$, the potential energy curve does not change from PE12. Since potential energy curve PE12 with state value $x_5$ around 1 has a zero or negative (downward) slope, state value $x_5$ converges around 1. That is, state value $x_5$ reaches equilibrium around 1.

Fig. 5 shows a change in a potential energy curve of output node $Nd_6$ in the case where input signals $Si_1$ and $Si_2$ are switched from {0, 0} to {1, 0}. Referring to Fig. 5, before input signals $Si_1$ and $Si_2$ are switched from {0, 0} to {1, 0}, it is supposed that state value $x_3$ is a value around 0.7, the potential energy curve of output node $Nd_6$ is PE21, and state value $x_6$ is stable at 0 on potential energy curve PE21. That is, a point corresponding to 0 on potential energy curve PE21 is a stable point of state value $x_6$. Since the forces (negative signals $S_{3,5}$ and $S_{3,6}$) applied to output nodes $Nd_5$ and $Nd_6$ from hub node $Nd_3$ are always the same, potential energy curve PE21 is equal to potential energy curve PE11 shown in Fig. 4.

Then, when the input signals are switched from {0, 0} to {1, 0} and state value $x_3$ decreases to 0.32 accordingly, the potential energy curve changes from PE21 to PE22. Although a point corresponding to 0 is a stable point of state value $x_6$ on potential energy curve PE22 as well, the negative signal output from hub node $Nd_3$ to output node $Nd_6$ increases to -0.32, and the suppression of state value $x_6$ by negative signal $S_{3,6}$ is therefore relaxed. In such a state, state value $x_6$ may slightly increase by noise signal $\eta$. When state value $x_6$ increases, potential energy curve PE22 is downwardly sloped, and positive signal $S_{6,3}$ output from output node $Nd_6$ to hub node $Nd_3$ increases, and state value $x_3$ therefore increases. As a result, when state value $x_3$ increases from 0.32, for example, the potential energy curve returns to PE21 from PE22 before state value $x_6$ reaches a value around 0.7. As a result, state value $x_6$ does not increase from around 0. That is, state value $x_6$ reaches equilibrium around 0.

In the case where input signals $Si_1$ and $Si_2$ are switched from {0, 0} to {0, 1}, state value $x_3$ decreases immediately after the switching, and both of state values $x_5$ and $x_6$ therefore increase to around 1. Then, state value $x_5$ changes according to a potential energy curve obtained by line-symmetrically inverting potential energy curve PE12 shown in Fig. 4, and converges around 0. State value $x_6$ changes according to a potential energy curve obtained by line-symmetrically inverting potential energy curve PE22 shown in Fig. 5, and converges around 1.

In information processing system 1, a global optimal solution is searched for by noise signals, as in an annealing method. Additionally, in information processing system 1, input signals $Si_1$ and $Si_2$ are encoded into time-series data of state value $x_3$ (temporal coding or dynamic coding). Furthermore, in information processing system 1, state value $x_3$ is dynamically changed by noise signal $\eta$, to dynamically change the potential energy curve of each of output nodes Nd5 and Nd6.

A genetic algorithm (see NPL 2) can be used, for example, to search for the network of information processing system 1 shown in Fig. 1. Specifically, each element is randomly determined from among -1, 0 and 1, to thereby generate a plurality of (e.g., a hundred) adjacency matrices C1. An evaluation index of the autoencoding function of a network corresponding to each of the plurality of adjacency matrices C1 is calculated, and the plurality of adjacency matrices C1 are ranked in descending order of the evaluation index. Of the plurality of adjacency matrices C1, a plurality of adjacency matrices C2 ranked equal to or higher than a predetermined rank (e.g., 25th) are identified. A predetermined number of (e.g., three) adjacency matrices C3 are generated from each of the plurality of adjacency matrices C2. The plurality of adjacency matrices C3 are adjacency matrices in which each element of corresponding adjacency matrix C2 is replaced with a value different from the element from among - 1, 0 and 1 with a predetermined probability (e.g., 1% to 10%). The calculation of the evaluation index of the autoencoding function and the subsequent process are repeated for the plurality of adjacency matrices C3 generated from the plurality of adjacency matrices C2.

The evaluation index of the autoencoding function is the sum of absolute values of differences between output signals $So_1$, $So_2$ and input signals $Si_1$, $Si_2$ in the case where the plurality of input signals $Si_1$ and $Si_2$ ({0, 0}, {0, 1}, {1, 0}, {1, 1}) are input to the network corresponding to each of the plurality of adjacency matrices C1, plus the sum of absolute values of differences between output signals $So_1$, $So_2$ and {0, 0} in the case where input signals $Si_1$ and $Si_2$ are returned to {0, 0}. In order to reflect vibration states and the like of output signals $So_1$ and $So_2$ in the evaluation index, average values of output signals $So_1$ and $So_2$ from the time when half of a predetermined standby time elapses since the input of input signals $Si_1$ and $Si_2$ to the network to the time when the standby time elapses may be used as output signals $So_1$ and $So_2$.

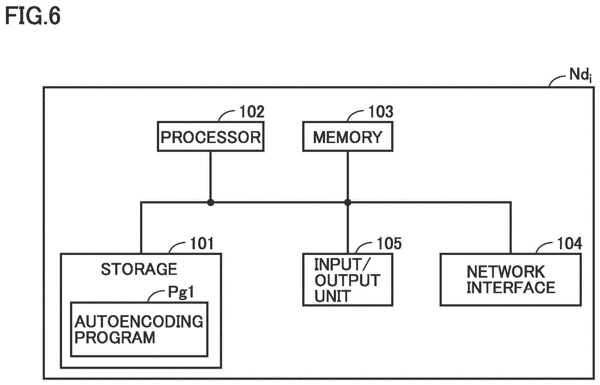

The following describes the case where information processing system 1 is formed as an edge computing system. In this case, node $Nd_i$ forms an edge node. Fig. 6 is a block diagram showing an example hardware configuration of node $Nd_i$ shown in Fig. 1. As shown in fig. 6, node $Nd_i$ includes a storage 101, a processor 102, a memory 103, a network interface 104, and an input/output unit 105.

Storage 101 is a nonvolatile storage device and includes, for example, a hard disk or an external storage medium. Storage 101 stores, for example, an operating system program (not shown) and an autoencoding program Pg1.

Processor 102 performs the functions of information processing system 1 by executing the various programs stored in storage 101. Processor 102 includes, for example, a central processing unit (CPU) or a graphics processing unit (GPU). When processor 102 of each node $Nd_i$ included in information processing system 1 executes autoencoding program Pg1, the autoencoding function of information processing system 1 is performed. Processor 102 transmits data to and receives data from an external device connected to the Internet via network interface 104.

Memory 103 is a volatile storage device and includes, for example, a random access memory (RAM). Memory 103 functions as a working memory, and temporarily stores various types of data required for execution of the programs.

Input/output unit 105 receives an operation from a user, and outputs a processing result of a program corresponding to the operation to the user. Input/output unit 105 includes, for example, a touch panel, a display, a lamp, and a speaker.

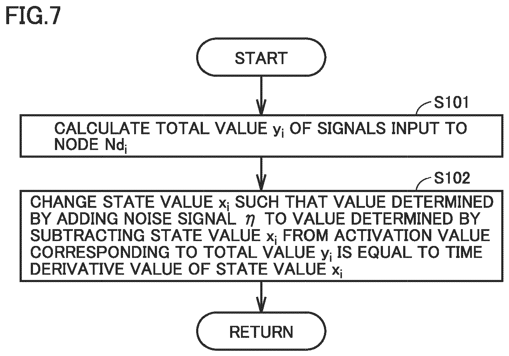

Fig. 7 is a flowchart showing an example flow of a process performed by processor 102 that executes autoencoding program Pg1 shown in Fig. 6. The process shown in Fig. 7 is invoked for each sampling time, for example, by a (not shown) main routine that comprehensively controls node $Nd_i$. Step is hereinafter abbreviated simply as S.

As shown in Fig. 7, processor 102 calculates total value $y_i$ of signals input to node $Nd_i$ in S101, and moves the process to S102. Processor 102 changes state value $x_i$ such that a value determined by adding noise signal $\eta$ to a value determined by subtracting state value $x_i$ from an activation value corresponding to total value $y_i$ is equal to a time derivative value of state value $x_i$, and moves the process back to the main routine.

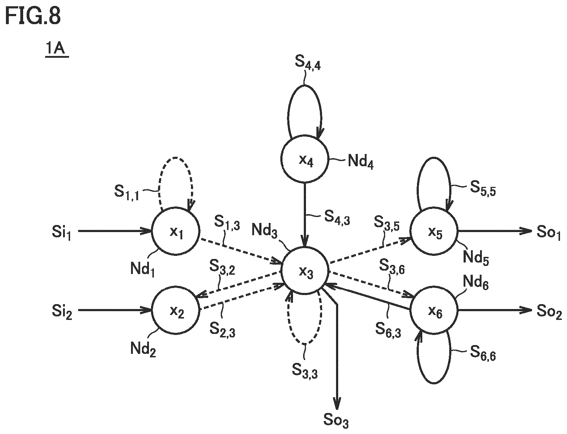

Fig. 8 is a block diagram showing a configuration of an information processing system 1A according to a modification of the embodiment. The configuration of information processing system 1A is that an output signal $So_3$ representing state value $x_3$ is output to outside of information processing system 1A from hub node $Nd_3$ in information processing system 1 shown in Fig. 1. As the configuration of information processing system 1A is otherwise the same as that of information processing system 1, description about the same configuration will not be repeated. State value $x_3$ is a feature amount of input signals $Si_1$ and $Si_2$ with the reduced dimension. According to information processing system 1A, the feature amount of input signals $Si_1$ and $Si_2$ can be obtained outside of information processing system 1.

As described above, according to the information processing system, the program and the method in each of the embodiment and the modification, the energy efficiency of the information processing system can be improved.

It should be understood that the embodiments disclosed herein are illustrative and non-restrictive in every respect. The scope of the present invention is defined by the terms of the claims, rather than the description above, and is intended to include any modifications within the meaning and scope equivalent to the terms of the claims.

REFERENCE SIGNS LIST

1, 1A information processing system; 101 storage; 102 processor; 103 memory; 104 network interface; 105 input/output unit; $Nd_1$ to $Nd_6$, $Nd_i$, $Nd_j$ node; Pg1 autoencoding program; $Si_1$, $Si_2$ input signal; $So_1$ to $So_3$ output signal.

**Claims**

1. A system for encoding a first input signal and a second input signal and then decoding respective encoded signals as a first output signal and a second output signal, the system comprising:

    a first input node that receives the first input signal;
    a second input node that receives the second input signal;
    a hub node;
    an auxiliary node;
    a first output node that outputs the first output signal; and
    a second output node that outputs the second output signal, wherein
    each of the first input node, the second input node, the hub node, the auxiliary node, the first output node, and the second output node outputs at least one of a positive signal representing a state value of the node and a negative signal representing a value having a sign inverted from a sign of the state value,
    the first input node outputs the negative signal of the first input node to each of the first input node and the hub node,
    the second input node outputs the negative signal of the second input node to the hub node,
    the hub node outputs the negative signal of the hub node to each of the hub node, the first output node, and the second output node,
    the auxiliary node outputs the positive signal of the auxiliary node to each of the hub node and the auxiliary node,
    the first output node outputs the positive signal of the first output node to the first output node, and outputs the positive signal of the first output node as the first output signal,
    the second output node outputs the positive signal of the second output node to each of the hub node and the second output node, and outputs the positive signal of the second output node as the second output signal, and
    each of the first input node, the second input node, the hub node, the auxiliary node, the first output node, and the second output node changes the state value of the node such that a value determined by adding a noise signal received by the node to a value determined by subtracting the state value of the node from an activation value corresponding to a total value of signals input to the node is equal to a time derivative value of the state value of the node.

2. The system according to claim 1, wherein the hub node outputs the state value of the hub node to outside of the system.

3. The system according to claim 1 or 2, wherein

   each of the first input node, the second input node, the hub node, the auxiliary node, the first output node, and the second output node is formed as an edge node, and
   the edge node includes a processor, a memory, and a communication unit.

4. A program for encoding a first input signal and a second input signal and then decoding respective encoded signals as a first output signal and a second output signal, in a system that receives the first input signal and the second input signal and outputs the first output signal and the second output signal,

   the system comprising:

   a first input node that receives the first input signal;
   a second input node that receives the second input signal;
   a hub node;
   an auxiliary node;
   a first output node that outputs the first output signal; and
   a second output node that outputs the second output signal, wherein

   each of the first input node, the second input node, the hub node, the auxiliary node, the first output node, and the second output node outputs at least one of a positive signal representing a state value of the node and a negative signal representing a value having a sign inverted from a sign of the state value,
   the first input node outputs the negative signal of the first input node to each of the first input node and the hub node,
   the second input node outputs the negative signal of the second input node to the hub node,
   the hub node outputs the negative signal of the hub node to each of the hub node, the first output node, and the second output node,
   the auxiliary node outputs the positive signal of the auxiliary node to each of the hub node and the auxiliary node,
   the first output node outputs the positive signal of the first output node to the first output node, and outputs the positive signal of the first output node as the first output signal,
the second output node outputs the positive signal of the second output node to each of the hub node and the second output node, and outputs the positive signal of the second output node as the second output signal, and
the program is executed by a processor included in each of the first input node, the second input node, the hub node, the auxiliary node, the first output node, and the second output node, to thereby change the state value of the node such that a value determined by adding a noise signal received by the node to a value determined by subtracting the state value of the node from an activation value corresponding to a total value of signals input to the node is equal to a time derivative value of the state value of the node.

5. A method for encoding a first input signal and a second input signal and then decoding respective encoded signals as a first output signal and a second output signal, in a system that receives the first input signal and the second input signal and outputs the first output signal and the second output signal,

   the system comprising:

   a first input node that receives the first input signal;
   a second input node that receives the second input signal;
   a hub node;
   an auxiliary node;
   a first output node that outputs the first output signal; and
   a second output node that outputs the second output signal, wherein

   each of the first input node, the second input node, the hub node, the auxiliary node, the first output node, and the second output node outputs at least one of a positive signal representing a state value of the node and a negative signal representing a value having a sign inverted from a sign of the state value,
   the first input node outputs the negative signal of the first input node to each of the first input node and the hub node,
   the second input node outputs the negative signal of the second input node to the hub node,
   the hub node outputs the negative signal of the hub node to each of the hub node, the first output node, and the second output node,
   the auxiliary node outputs the positive signal of the auxiliary node to each of the hub node and the auxiliary node,

the first output node outputs the positive signal of the first output node to the first output node, and outputs the positive signal of the first output node as the first output signal,

the second output node outputs the positive signal of the second output node to each of the hub node and the second output node, and outputs the positive signal of the second output node as the second output signal, and

the method includes, by each of the first input node, the second input node, the hub node, the auxiliary node, the first output node, and the second output node,

calculating a total value of signals input to the node, and

changing the state value of the node such that a value determined by adding a noise signal received by the node to a value determined by subtracting the state value of the node from an activation value corresponding to the total value is equal to a time derivative value of the state value of the node.

FIG.1

<u>1</u>

FIG.2

FIG.3

FIG.4

STATE VALUE $x_5$

FIG.5

STATE VALUE $x_6$

FIG.6

FIG.7

START

↓

CALCULATE TOTAL VALUE $y_i$ OF SIGNALS INPUT TO NODE $Nd_i$ — S101

↓

CHANGE STATE VALUE $x_i$ SUCH THAT VALUE DETERMINED BY ADDING NOISE SIGNAL $\eta$ TO VALUE DETERMINED BY SUBTRACTING STATE VALUE $x_i$ FROM ACTIVATION VALUE CORRESPONDING TO TOTAL VALUE $y_i$ IS EQUAL TO TIME DERIVATIVE VALUE OF STATE VALUE $x_i$ — S102

↓

RETURN

# FIG.8

<u>1A</u>

## INTERNATIONAL SEARCH REPORT

| International application No. |
| --- |
| **PCT/JP2023/030480** |

| A. | CLASSIFICATION OF SUBJECT MATTER |
| --- | --- |

*G06N 3/0455*(2023.01)i
FI:  G06N3/0455

According to International Patent Classification (IPC) or to both national classification and IPC

| B. | FIELDS SEARCHED |
| --- | --- |

Minimum documentation searched (classification system followed by classification symbols)

G06N3/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2022/059194 A1 (FUJITSU LTD.) 24 March 2022 (2022-03-24)<br>paragraphs [0017]-[0021], fig. 3 | 1-5 |
| A | JP 2022-20940 A (TOYOTA MOTOR CORP.) 02 February 2022 (2022-02-02)<br>paragraphs [0020]-[0022], fig. 3 | 1-5 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 October 2023** | **07 November 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 589 477 A1

| INTERNATIONAL SEARCH REPORT | | | International application No. |
| Information on patent family members | | | PCT/JP2023/030480 |

| Patent document cited in search report | Publication date (day/month/year) | Patent family member(s) | Publication date (day/month/year) |
|---|---|---|---|
| WO 2022/059194 A1 | 24 March 2022 | US 2023/0229893 A1 paragraphs [0030]-[0034], fig. 3 | |
| JP 2022-20940 A | 02 February 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MASAYO INOUE** ; **KUNIHIKO KANEKO**. Cooperative Adaptive Responses in Gene Regulatory Networks with Many Degrees of Freedom. *PLOS Computational Biology*, 04 April 2013, vol. 9 (4), e1003001